# EUROPEAN PATENT APPLICATION

(11) **EP 4 546 523 A1**
(43) Date of publication of application: **30.04.2025**
(21) Application number: 24175418.3
(22) Date of filing: 13.05.2024
(51) Int. Cl.: H01M 50/209, H01M 50/593

(54) **BATTERY CELL CARRIER, BATTERY MODULE, AND METHOD FOR FABRICATING BATTERY MODULE**

(30) Priority: 23.10.2023 KR 20230142367
(71) Applicant: Samsung SDI Co., Ltd., Yongin-si, Gyeonggi-do 17084 (KR)
(72) Inventor: Jung, Jung Kyun, 16678 Suwon-si, Gyeonggi-do, (KR)
(74) Representative: Gulde & Partner

(57) **Abstract**

The present disclosure relates to a battery cell carrier, a battery module, and a method of manufacturing the battery module, the battery module including: a plurality of battery cells arranged in a first direction; a battery cell carrier including a pair of side plates disposed to be spaced in a second direction orthogonal to the first direction for the plurality of battery cells to be interposed therebetween, the pair of side plates having a gap filler injection hole formed therein; and a side gap filler layer which is formed by a gap filler being injected between both side surfaces of the plurality of battery cells and the pair of side plates through the gap filler injection hole and which is configured to fix the plurality of battery cells to the battery cell carrier.

## Description

### BACKGROUND

### 1. Field

The present invention relates to a battery cell carrier, a battery module including the battery cell carrier, and a method of manufacturing the battery module.

### 2. Discussion

In general, with rapidly increasing demand for portable electronics, such as laptops, video cameras, and mobile phones, and commercialization of robots and electric vehicles, research is actively carried out to develop high-performance secondary batteries enabling repeated charging/discharging.

Secondary batteries are widely used in small devices, such as portable electronics, as well as medium and large devices, such as electric vehicles and energy storage systems (ESS), for power generation and energy storage. In particular, in medium or large devices, multiple battery cells are electrically connected to each other to form a battery module in order to enhance output and/or capacity of the batteries.

A battery module may include a battery cell carrier and a plurality of battery cells seated in an inner space of the battery cell carrier. A gap filler may be interposed between the plurality of battery cells and the battery cell carrier to allow the plurality of battery cells to be fixed to the battery cell carrier.

The above information disclosed in this Background section is provided for enhancement of understanding of the background of the present disclosure, and, therefore, it may contain information that does not constitute related (or prior) art.

### SUMMARY

According to an aspect of the embodiments of the present invention, a battery cell carrier is provided allowing a gap filler to be easily injected with a uniform distribution between a plurality of battery cells and the battery cell carrier, a battery module including the battery cell carrier, and a method of manufacturing the battery module.

These and other aspects and features of the present disclosure will be described in or will be apparent from the following description of some embodiments of the present disclosure.

According to an aspect of the present invention, there is provided a battery cell carrier including a pair of side plates disposed to be spaced in a second direction orthogonal to a first direction for a plurality of battery cells arranged in the first direction to be interposed therebetween and having a gap filler injection hole through which a gap filler is injected formed therein.

The gap filler injection hole may extend in the first direction.

The battery cell may include a terminal side surface which has a terminal provided thereon to protrude toward one side in a third direction orthogonal to the first direction and the second direction and a bottom surface which is a side surface opposite to the terminal side surface in the third direction, and the gap filler injection hole may be gradually inclined toward the bottom surface closer to a side surface of the battery cell and formed to pass through the side plate in the second direction.

The gap filler injection hole may be provided as a plurality of gap filler injection holes, and the plurality of gap filler injection holes may be disposed to be spaced in the third direction orthogonal to the first direction and the second direction in the side plate.

The gap filler injection hole may be provided as a plurality of gap filler injection holes, and the plurality of gap filler injection holes may be disposed to be spaced in the first direction in the side plate.

The battery cell may include a terminal side surface which has a terminal provided thereon to protrude toward one side in a third direction orthogonal to the first direction and the second direction and a bottom surface which is a side surface opposite to the terminal side surface in the third direction, and the battery cell carrier according to the aspect of the present invention may further include a bottom plate configured to cover the bottom surface and have one side and the other side connected to the pair of side plates in the second direction.

The battery cell carrier according to the aspect of the present invention may further include a shutter configured to selectively open or close the gap filler injection hole.

According to another aspect of the present invention, there is provided a battery module including: a plurality of battery cells arranged in a first direction; a battery cell carrier including a pair of side plates disposed to be spaced in a second direction orthogonal to the first direction for the plurality of battery cells to be interposed therebetween, the pair of side plates having a gap filler injection hole formed therein; and a side gap filler layer which is formed by a gap filler being injected between both side surfaces of the plurality of battery cells and the pair of side plates through the gap filler injection hole and which is configured to fix the plurality of battery cells to the battery cell carrier.

The gap filler injection hole may extend in the first direction.

The battery cell may include a terminal side surface which has a terminal provided thereon to protrude toward one side in a third direction orthogonal to the first direction and the second direction and a bottom surface which is a side surface opposite to the terminal side surface in the third direction, and the gap filler injection hole may be gradually inclined toward the bottom surface closer to a side surface of the battery cell and formed to pass through the side plate in the second direction.

The gap filler injection hole may be provided as a plurality of gap filler injection holes, and the plurality of gap filler injection holes may be disposed to be spaced in the third direction orthogonal to the first direction and the second direction in the side plate.

The gap filler injection hole may be provided as a plurality of gap filler injection holes, and the plurality of gap filler injection holes may be disposed to be spaced in the first direction in the side plate.

The battery cell may include a terminal side surface which has a terminal provided thereon to protrude toward one side in a third direction orthogonal to the first direction and the second direction and a bottom surface which is a side surface opposite to the terminal side surface in the third direction, the battery cell carrier may further include a bottom plate configured to cover the bottom surface and have one side and the other side connected to the pair of side plates in the second direction, and the battery module according to the other aspect of the present invention may further include a bottom gap filler layer formed by a gap filler being interposed between the bottom surface and the bottom plate.

The battery cell carrier may further include a shutter configured to selectively open or close the gap filler injection hole.

The shutter may include: a body configured to be detachably fitted into the gap filler injection hole; and a flange connected to the body while stepped therefrom and having a shape larger than a shape of the gap filler injection hole in a plan view to cover the gap filler injection hole from an outer side of the side plate when the body is fitted into the gap filler injection hole.

The shutter may include: a movable plate disposed between the side plate and the plurality of battery cells and configured to be movable between a first position at which the movable plate opens the gap filler injection hole and a second position at which the movable plate closes the gap filler injection hole; and a trigger configured to protrude from the movable plate to the outer side of the side plate through the gap filler injection hole and be pressed to move the movable plate.

The gap filler injection hole may include: a slot portion extending in the first direction and into which a device for injecting the gap filler is fitted when the movable plate is positioned at the first position; and a trigger accommodating portion extending in the third direction to be connected to the slot portion and configured to accommodate the trigger therein when the movable plate is positioned at the first position.

According to still another aspect of the present invention, there is provided a method of manufacturing a battery module, the method including: a battery cell carrier preparing operation of preparing a battery cell carrier including a pair of side plates spaced in a second direction orthogonal to a first direction for a plurality of battery cells arranged in the first direction to be interposed therebetween and having a gap filler injection hole formed therein; a battery cell mounting operation of mounting the plurality of battery cells on the battery cell carrier for the plurality of battery cells to be interposed between the pair of side plates; and a gap filler injecting operation of injecting a gap filler between both side surfaces of the plurality of battery cells and the pair of side plates through the gap filler injection hole to form a side gap filler layer configured to fix the plurality of battery cells to the battery cell carrier.

The battery cell carrier may further include a bottom plate having one side and the other side connected to the pair of side plates in the second direction, the method according to the still another aspect of the present invention may further include, prior to the battery cell mounting operation, a gap filler applying operation of applying a gap filler on the bottom plate, and in the battery cell mounting operation, the plurality of battery cells may be mounted on the battery cell carrier for the gap filler applied on the bottom plate to be interposed between the plurality of battery cells and the bottom plate.

The battery cell carrier may further include a shutter configured to selectively open or close the gap filler injection hole, and the method according to the still another aspect of the present invention may further include: prior to the gap filler injecting operation, a gap filler injection hole opening operation of opening the gap filler injection hole; and after the gap filler injecting operation, a gap filler injection hole closing operation of closing the gap filler injection hole with the shutter.

According to one embodiment of the present invention, a side gap filler layer in which a gap filler is dispersed with a uniform distribution can be formed between a plurality of battery cells and a sidewall of a battery cell carrier. Therefore, movement can be suppressed between the battery cell carrier and the plurality of battery cells in a battery module.

According to one embodiment of the present invention, it is not necessary to tilt the battery cell carrier for the sidewall of the battery cell carrier to be supported on a floor to apply a gap filler on the sidewall. Also, a gap filler can be simultaneously applied on both sidewalls of the battery cell carrier that face each other. Therefore, productivity of the battery module can be improved.

However, the effects obtainable through the present disclosure are not limited to the above effects, and other technical effects that are not mentioned will be clearly understood by those skilled in the art from the following description of the present disclosure.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is an exploded perspective view of a battery module according to a first embodiment of the present invention;
FIG. 2 is a longitudinal cross-sectional view taken along the line II-II of FIG. 1;
FIG. 3 is an enlarged cross-sectional view of portion III of FIG. 2 and also illustrates a gap filler injection device configured to inject a gap filler;
FIG. 4 is a lateral view of a battery cell carrier included in the battery module of FIG. 2;
FIG. 5 is a longitudinal cross-sectional view of a battery module according to a second embodiment of the present invention;
FIG. 6 is a perspective view of a battery cell carrier included in the battery module of FIG. 5;
FIG. 7 is a longitudinal cross-sectional view of a battery module according to a third embodiment of the present invention;
FIG. 8 is a perspective view of a battery cell carrier included in the battery module of FIG. 7 and illustrates an exploded state of one of a plurality of shutters;
FIG. 9 is a longitudinal cross-sectional view of a battery module according to a fourth embodiment of the present invention;
FIG. 10 is a perspective view of a battery cell carrier included in the battery module of FIG. 9 and illustrates an exploded state of one of a plurality of shutters;
FIG. 11 is an enlarged lateral view of portion XI of FIG. 10 which is a portion of the battery cell carrier; and
FIG. 12 is a flowchart illustrating a method of manufacturing a battery module according to one embodiment of the present invention.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

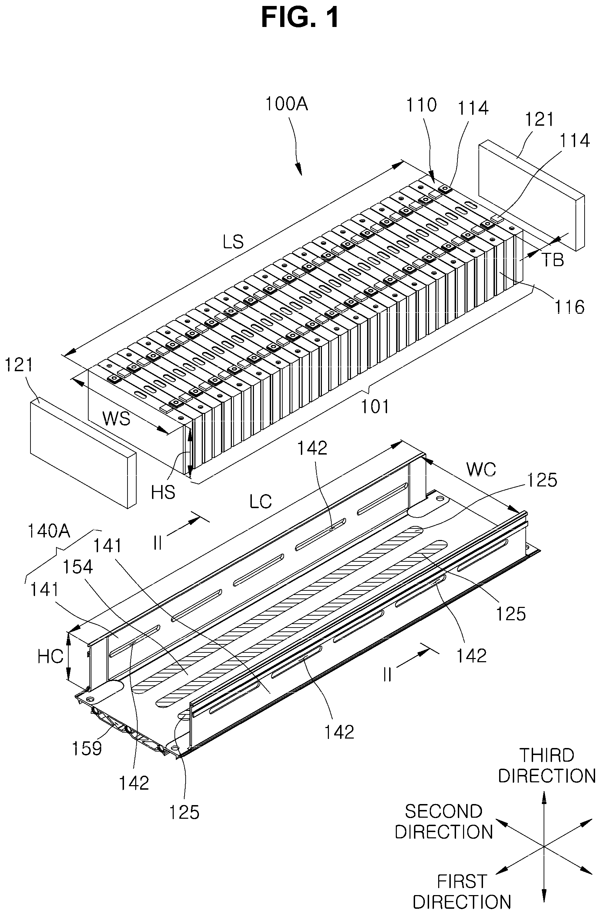

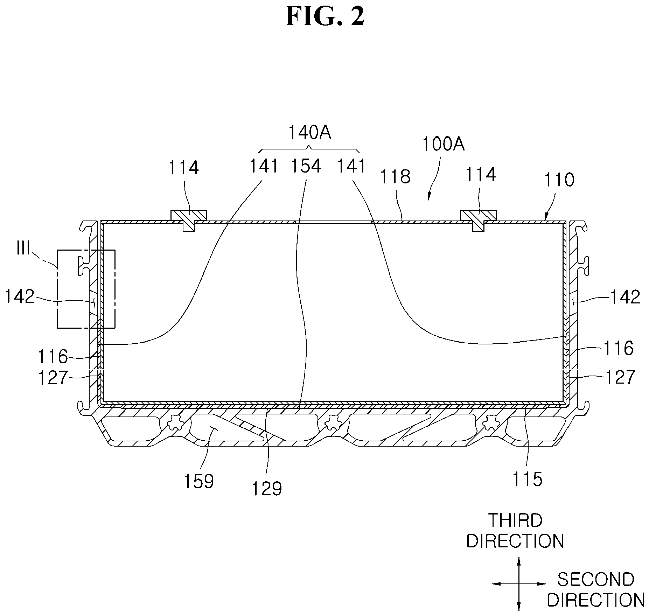

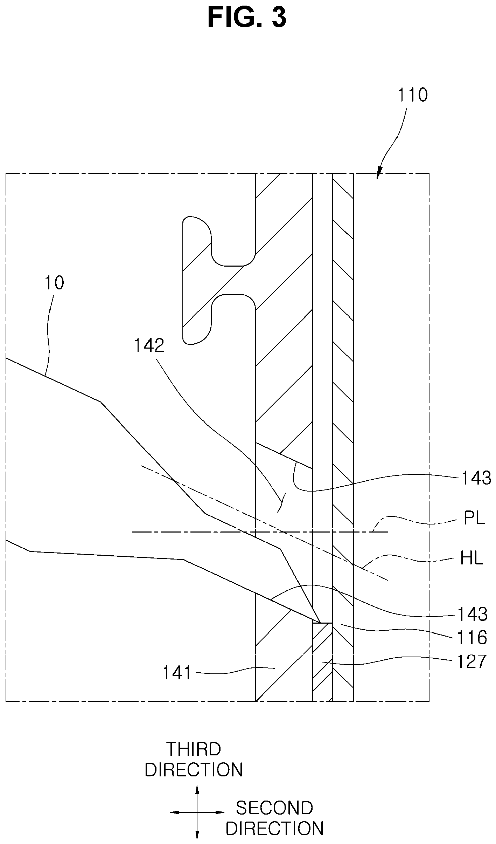

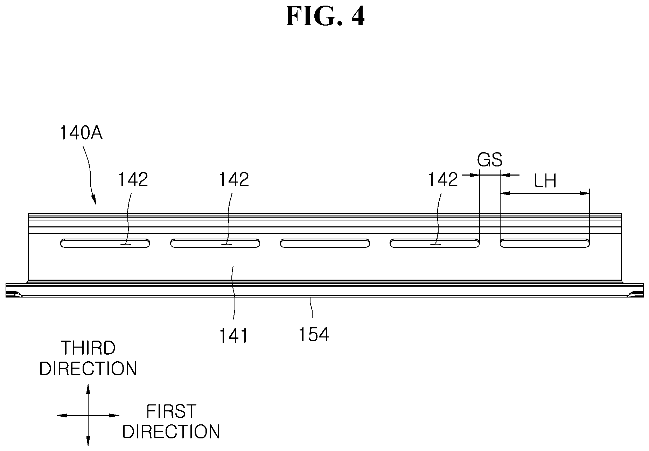

FIG. 1 is an exploded perspective view of a battery module according to a first embodiment of the present invention; FIG. 2 is a longitudinal cross-sectional view taken along the line II-II of FIG. 1; FIG. 3 is an enlarged cross-sectional view of portion III of FIG. 2 and also illustrates a gap filler injection device configured to inject a gap filler, and FIG. 4 is a lateral view of a battery cell carrier included in the battery module of FIG. 2.

Referring to FIGS. 1 to 4, a battery module 100A according to the first embodiment of the present invention includes a plurality of battery cells 110, a battery cell carrier 140A, and a side gap filler layer 127. The battery cells 110 serve as unit structures for storing and supplying power in the battery module 100A.

Although not illustrated in the drawings, in an embodiment, the battery cell 110 may be a prismatic secondary battery having an electrode assembly (not illustrated), in which a positive plate (not illustrated) and a negative plate (not illustrated) are disposed with a separator (not illustrated) disposed therebetween, provided therein to charge and discharge an amount, for example a predetermined amount of power.

For example, each battery cell 110 may include a cell main body having a substantially rectangular parallelepiped shape and a pair of terminals 114 protruding upward from the cell main body. One of the pair of terminals 114 may be a positive terminal, and the other may be a negative terminal. In a battery cell stack 101, terminals of different polarity may be arranged alternatingly in one line along the first direction.

The cell main body may include a case or a can having an inner space formed to accommodate the electrode assembly and a cap plate configured to close an open upper side of the case. The pair of terminals 114 may be installed on the cap plate.

Hereinafter, a direction parallel to a direction of a thickness TB of the battery cell 110, that is, the case, e.g. the can, will be referred to as "first direction," a direction parallel to a direction of a width WS of the battery cell 110, that is, the case, will be referred to as "second direction," and a direction parallel to a direction of a height HS of the battery cell 110, that is, the case, will be referred to as "third direction." The first direction may also be referred to as "front-rear direction," the second direction may also be referred to as "left-right direction," and the third direction may also be referred to as "up-down direction."

In each battery cell 110, a side surface on which the pair of terminals 114 protruding toward one side in the third direction are provided will be referred to as "terminal side surface 118," and a side surface opposite to the terminal side surface 118 in the third direction will be referred to as "bottom surface 115."

The plurality of battery cells 110 is arranged in the first direction. The plurality of battery cells 110 may be arranged in a row so that a back surface of one battery cell 110 of an arbitrary pair of battery cells 110 neighboring each other faces a front surface of the other battery cell 110 of the pair of battery cells 110. The plurality of battery cells 110 arranged in a row in the first direction may be referred to as "battery cell stack 101."

The battery module 100 A may further include a pair of end plates 121. One of the pair of end plates 121 may be disposed in front of the plurality of battery cells 110 to cover a front surface of the battery cell 110 positioned foremost in the first direction among the plurality of battery cells 110 and may be referred to as "front plate."

The other one of the pair of end plates 121 may be disposed behind the plurality of battery cells 110 to cover a back surface of the battery cell 110 positioned rearmost in the first direction among the plurality of battery cells 110 and may be referred to as "rear plate."

The battery cell carrier 140A includes a pair of side plates 141. The plurality of battery cells 110, that is, the battery cell stack 101, are interposed between the pair of side plates 141. The battery cell carrier 140A may further include a bottom plate 154 configured to cover the bottom surface 115 of the plurality of battery cells 110. One side corner and the other side corner of the bottom plate 154 in the second direction may be connected to one side corner of the pair of side plates 141 in the first direction.

In other words, both side corners of the bottom plate 154 in the direction of the width WS of the battery cell 110 may be connected to a lower end corner of the pair of side plates 141 in the direction of the height HS of the battery cell 110. A coolant flow path 159 in which a coolant for preventing overheating during charging and discharging of the plurality of battery cells 110 flows may be formed inside the bottom plate 154.

In the first direction, a length LC of the side plate 141 may be the same as a length LS of the battery cell stack 101 within an allowable error range. Alternatively, the length LC may be longer or shorter than the length LS. In the third direction, a height HC of the side plate 141 may be the same as or slightly less than the height HS of the battery cell stack 101.

In the second direction, an interval WC between the pair of side plates 141 may be slightly larger than the width WS of the battery cell stack 101. In an embodiment, the interval WC between the pair of side plates 141 may be larger than the width WS of the battery cell stack 101 by as much as two times a thickness of the side gap filler layer 127.

A gap filler injection hole 142 passing through the side plate 141 in a thickness direction thereof is formed in each of the pair of side plates 141. The gap filler injection hole 142 may extend in the first direction. The side gap filler layer 127 fixes the plurality of battery cells 110 to the battery cell carrier 140A.

The side gap filler layer 127 is formed by a gap filler 125 being injected between the pair of side plates 141 and both side surfaces 116 of the plurality of battery cells 110 in the second direction through the gap filler injection hole 142. For example, the gap filler 125 may be a sticky adhesive or a molding material or a glue. Optionally, the filler may be a two-component filler.

The side gap filler layer 127 may be formed by the gap filler 125 being injected between the side surfaces 116 of the plurality of battery cells 110 and an inner surface of the side plate 141 facing the side surfaces 116, filled therebetween while flowing downward in the third direction due to gravity, and cured. Curing may be exothermic or endothermic. Therefore, the side gap filler layer 127 may be formed in a region between the gap filler injection hole 142 and a lower end of the side plate 141 in the first direction.

The gap filler injection hole 142 may be formed above an intermediate point of the height HC of the side plate 141, that is, formed at a point spaced farther from the bottom plate 154 than the intermediate point of the height HC. Optionally, the gap filler injection hole 142 may be formed at any arbitrary point of height HC of the side plate 141.

The gap filler injection hole 142 may be gradually inclined toward the bottom plate 154 closer to the side surface 116 of the battery cell 110 and formed to pass through the side plate 141 in the second direction. For example, as illustrated in FIG. 3, a virtual inclined line HL parallel to a cross-section of an inner side surface 143 limiting the gap filler injection hole 142 is inclined relative to a virtual horizontal line PL that is parallel to the second direction and parallel to the thickness direction of the side plate 141. For example, an angle of inclination of the inclined line HL relative to the horizontal line PL may be in a range of 0° to 80°. Preferably, the angle of inclination ranges from 10° to 45°. More preferably, the angle of inclination ranges from 20° to 40°. This range enables smooth insertion of a tip of the device 10.

Therefore, it is not necessary to inject the gap filler 125 in a state in which a device 10 for injecting the gap filler 125, such as an injector or a syringe, is laid parallel to the second direction and fitted into the gap filler injection hole 142, and the gap filler 125 may be injected after an end of the gap filler injection device 10 is fitted into the gap filler injection hole 142 in a state in which the gap filler injection device 10 is tilted at the angle of inclination mentioned above.

Accordingly, the gap filler 125 may be injected between the inner surface of the side plate 141 and the side surface 116 of the battery cell 110 without excessive bending of the gap filler injection device 10 hung on the battery cell carrier 140Athat is conveyed with the bottom plate 154 supported on a conveyor (not illustrated). Also, the gap filler 125 may be injected using the gap filler injection device 10 even without tilting of the battery cell carrier 140A on the conveyor for the side plate 141 to be supported on the conveyor.

Also, since the gap filler 125 is injected through the gap filler injection hole 142 from an outer surface of the side plate 141 instead of being directly applied on the inner surface of the side plate 141 through the gap filler injection device 10, a pair of gap filler injection devices 10 may be disposed to not interfere with each other, and the gap filler 125 may be injected through the gap filler injection hole 142 and applied on the pair of side plates 141 concurrently, e.g. simultaneously. Therefore, productivity of the battery module 100 A may be improved.

The gap filler injection hole 142 may be provided as a plurality of gap filler injection holes 142, and the plurality of gap filler injection holes 142 may be disposed in a row in the first direction while being spaced from each other. Referring to FIG. 4, a length LH of one gap filler injection hole 142 among the plurality of gap filler injection holes 142 arranged in a row may be, for example, one to ten times, preferably two to eight times, more preferably three to five times the thickness TB of the battery cell 110. Specifically, for example, the length LH of the gap filler injection hole 142 may be in a range of 50 mm to 200 mm, preferably 80 mm to 150 mm, more preferably 100 mm to 120 mm.

An interval GS between a pair of gap filler injection holes 142 neighboring each other among the plurality of gap filler injection holes 142 may be less than or equal to the thickness TB of one battery cell 110. For example, a width of the gap filler injection hole 142 in the first direction may be in a range of 1 mm to 20 mm, preferably 3 mm to 15 mm, more preferably 7 mm to 13 mm. In other words, the interval GS may be such that the rigidity of the side plate 141, when carrying battery cells, is ensured.

Referring back to FIGS. 1 to 4, the battery module 100A may further include a bottom gap filler layer 129 formed by the gap filler 125 being interposed between the bottom plate 154 and the bottom surface 115 of the battery cell 110. The bottom gap filler layer 129 is formed between an upper surface of the bottom plate 154 and the bottom surface 115 of the battery cell 110.

The bottom gap filler layer 129 may be formed by, prior to mounting of the plurality of battery cells 110 on the battery cell carrier 140Afor the plurality of battery cells 110 to be interposed between the pair of side plates 141, applying the gap filler 125 on the upper surface of the bottom plate 154 with the gap filler injection device 10 such as an injector or a syringe, mounting the plurality of battery cells 110 on the battery cell carrier 140A, and curing the gap filler 125.

As illustrated as an example in FIG. 1, the gap filler 125 may be applied along a plurality of linear paths (three paths shown in the lower illustration of Fig. 1) that extend in the first direction and are spaced from each other in the second direction on the upper surface of the bottom plate 154. As illustrated in FIG. 2, the side gap filler layer 127 and the bottom gap filler layer 129 may be combined with each other without a clear boundary on both ends of the bottom plate 154 in a width direction thereof.

After the plurality of battery cells 110 are mounted on the battery cell carrier 140A, and the gap filler 125 is applied to form the side gap filler layer 127 and the bottom gap filler layer 129, the pair of end plates 121 may be fixed and coupled to both ends of the pair of side plates 141 in the first direction by a method such as welding.

Although not illustrated in FIG. 1, the battery module 100A may further include a plurality of busbars and a busbar holder. The plurality of busbars electrically connect the terminals 114 of the pair of battery cells 110 neighboring each other among the plurality of battery cells 110. The busbar holder may support the plurality of busbars and be positioned on the plurality of battery cells 110. For example, the busbar holder may be fixed and supported by the pair of side plates 141.

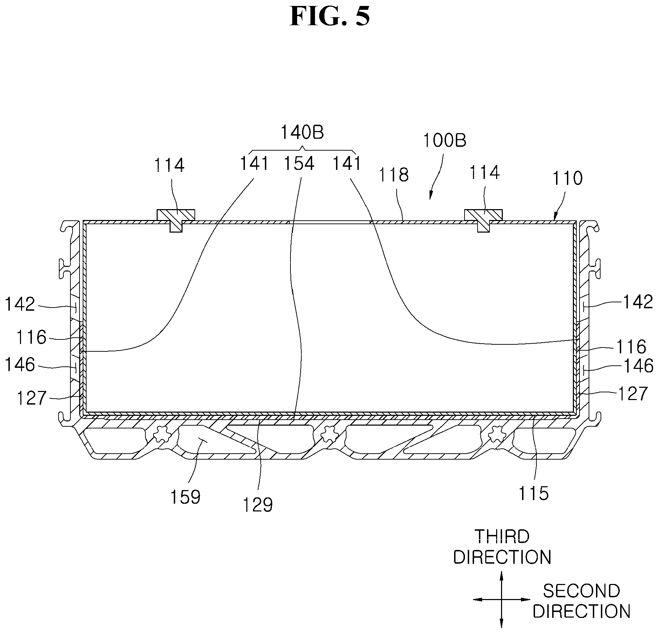

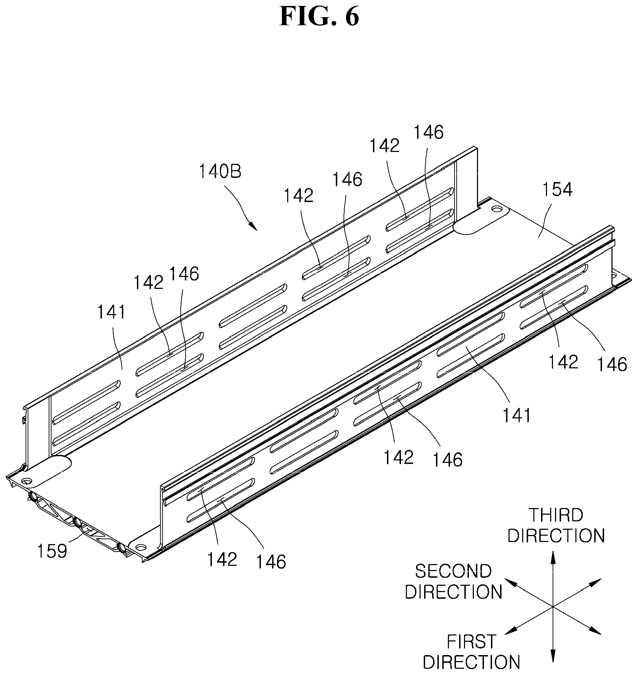

FIG. 5 is a longitudinal cross-sectional view of a battery module according to a second embodiment of the present invention, and FIG. 6 is a perspective view of a battery cell carrier included in the battery module of FIG. 5. Referring to FIGS. 5 and 6, like the battery module 100A according to the first embodiment of the present invention, a battery module 100B according to the second embodiment of the present invention may include a plurality of battery cells 110, a battery cell carrier 140B, a side gap filler layer 127, and a bottom gap filler layer 129.

Since the plurality of battery cells 110, the side gap filler layer 127, and the bottom gap filler layer 129 included in the battery module 100B according to the second embodiment of the present invention may be the same as the plurality of battery cells 110, the side gap filler layer 127, and the bottom gap filler layer 129 that are included in the battery module 100A according to the first embodiment of the present invention and denoted by the same reference numerals, repeated descriptions thereof will be omitted.

The battery cell carrier 140B includes a pair of side plates 141 and a bottom plate 154. Since the bottom plate 154 is the same as the bottom plate 154 of the battery cell carrier 140A included in the battery module 100A according to the first embodiment of the present invention, repeated description thereof will be omitted.

The plurality of battery cells 110, that is, a battery cell stack 101, may be interposed between the pair of side plates 141. A first gap filler injection hole 142 and a second gap filler injection hole 146 that pass through each side plate 141 in the thickness direction thereof may be formed in the pair of side plates 141. The first gap filler injection hole 142 and the second gap filler injection hole 146 may be disposed to be spaced in the third direction.

For example, the first gap filler injection hole 142 may be formed above an intermediate point of the height HC of the side plate 141 (see FIG. 1), that is, formed at a point spaced farther from the bottom plate 154 than the intermediate point of the height HC, and the second gap filler injection hole 146 may be formed below the intermediate point of the height HC of the side plate 141, that is, formed at a point closer to the bottom plate 154 than the intermediate point of the height HC.

The first gap filler injection hole 142 and the second gap filler injection hole 146 may be gradually inclined toward the bottom plate 154 closer to a side surface 116 of the battery cell 110 and formed to pass through the side plate 141 in the second direction. Optionally, the first gap filler injection hole 142 and the second gap filler injection hole 146 may have different angles of inclination.

The first gap filler injection hole 142 and the second gap filler injection hole 146 may be provided as a plurality of first gap filler injection holes 142 and a plurality of second gap filler injection holes 146, respectively. The plurality of first gap filler injection holes 142 may be disposed in a row in the first direction while being spaced from each other. The plurality of second gap filler injection holes 146 may be disposed in a row, parallel to the plurality of first gap filler injection holes 142, while being spaced from each other.

The side gap filler layer 127 may be formed by a gap filler 125 being injected between the pair of side plates 141 and both side surfaces 116 of the plurality of battery cells 110 in the second direction through the first gap filler injection holes 142 and the second gap filler injection holes 146. The side gap filler layer 127 fixes the plurality of battery cells 110 to the battery cell carrier 140B.

In a case where the gap filler 125 has high viscosity, the gap filler 125 injected through the first gap filler injection holes 142 may be cured between the pair of side plates 141 and both side surfaces 116 of the battery cells 110 without flowing downward to lower ends of the side plates 141, but the gap filler 125 injected through the second gap filler injection hole 146 may flow downward to the lower ends of the side plates 141. Therefore, the side gap filler layer 127 may be formed in a wide region, and the plurality of battery cells 110 may be more firmly fixed to the battery cell carrier 140B.

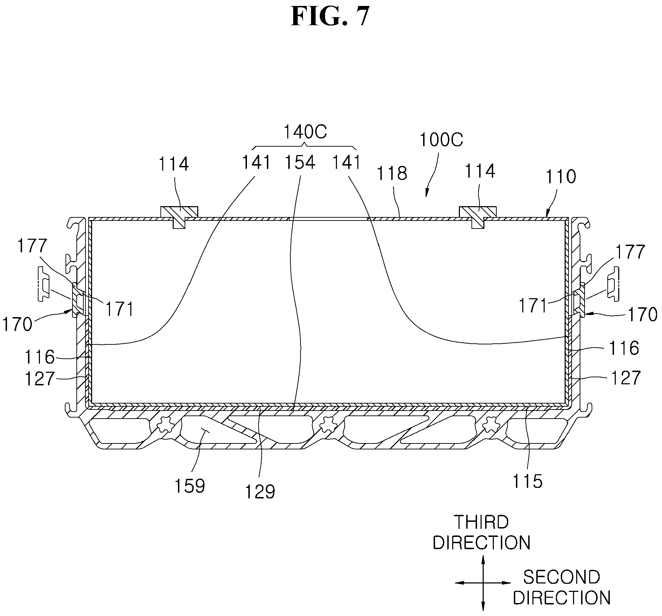

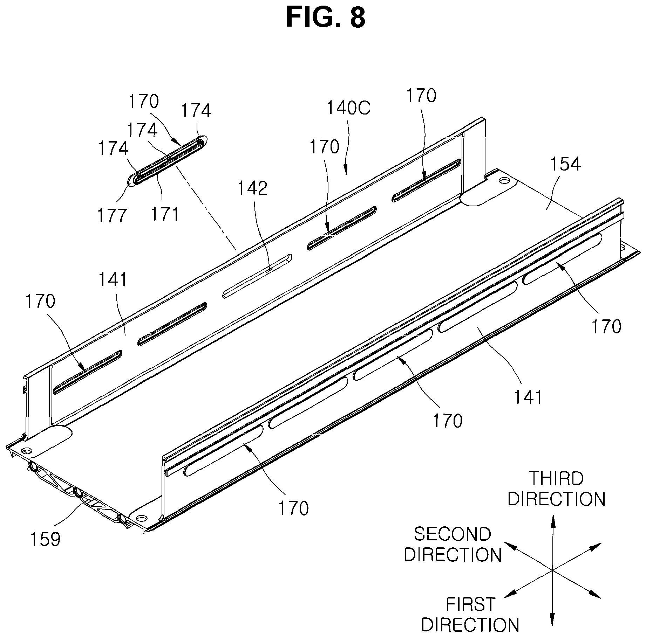

FIG. 7 is a longitudinal cross-sectional view of a battery module according to a third embodiment of the present invention, and FIG. 8 is a perspective view of a battery cell carrier included in the battery module of FIG. 7 and illustrates an exploded state of one of a plurality of shutters. Referring to FIGS. 7 and 8, like the battery module 100A according to the first embodiment of the present invention, a battery module 100C according to the third embodiment of the present invention may include a plurality of battery cells 110, a battery cell carrier 140C, a side gap filler layer 127, and a bottom gap filler layer 129.

Since the plurality of battery cells 110, the side gap filler layer 127, and the bottom gap filler layer 129 included in the battery module 100C according to the third embodiment of the present invention may be the same as the plurality of battery cells 110, the side gap filler layer 127, and the bottom gap filler layer 129 that are included in the battery module 100A according to the first embodiment of the present invention and denoted by the same reference numerals, repeated descriptions thereof will be omitted.

The battery cell carrier 140C includes a pair of side plates 141, a bottom plate 154, and a shutter 170. Since the pair of side plates 141 and the bottom plate 154 may be the same as the pair of side plates 141 and the bottom plate 154 of the battery cell carrier 140A included in the battery module 100A according to the first embodiment of the present invention, repeated descriptions thereof will be omitted.

The shutter 170 selectively opens or closes a gap filler injection hole 142 formed in the side plate 141. In other words, a worker manufacturing the battery module 100C may use the shutter 170 to close or open the gap filler injection hole 142. The gap filler injection hole 142 may be provided as a plurality of gap filler injection holes 142, and the shutter 170 may be provided as a plurality of shutters 170 to correspond one-to-one to the gap filler injection holes 142.

The shutter 170 may include a body 171, a flange 177, and a close contact protrusion 174. The body 171 may be detachably fitted into the gap filler injection hole 142. The flange 177 may be connected to the body 171 while stepped therefrom and may cover the gap filler injection hole 142 from an outer side of the side plate 141 when the body 171 is fitted into the gap filler injection hole 142. For the flange 177 to cover the gap filler injection hole 142, the flange 177 may have a shape larger than a shape of the gap filler injection hole 142 in a plan view.

The close contact protrusion 174 may come in close contact with an inner side surface 143 (see FIG. 3) of the gap filler injection hole 142 to prevent the shutter 170 from falling out of the gap filler injection hole 142 when the body 171 is fitted into the gap filler injection hole 142.

Before a gap filler 125 (see FIG. 1) is injected through the gap filler injection hole 142, the shutter 170 may be detached from the gap filler injection hole 142 for the gap filler injection hole 142 to be opened. Also, after the gap filler 125 is injected through the gap filler injection hole 142, the shutter 170 may be fitted into the gap filler injection hole 142 and fixed for the gap filler injection hole 142 to be closed. Therefore, it is possible to prevent foreign matter from entering the battery cell carrier 140C through the gap filler injection hole 142 after the gap filler 125 is injected.

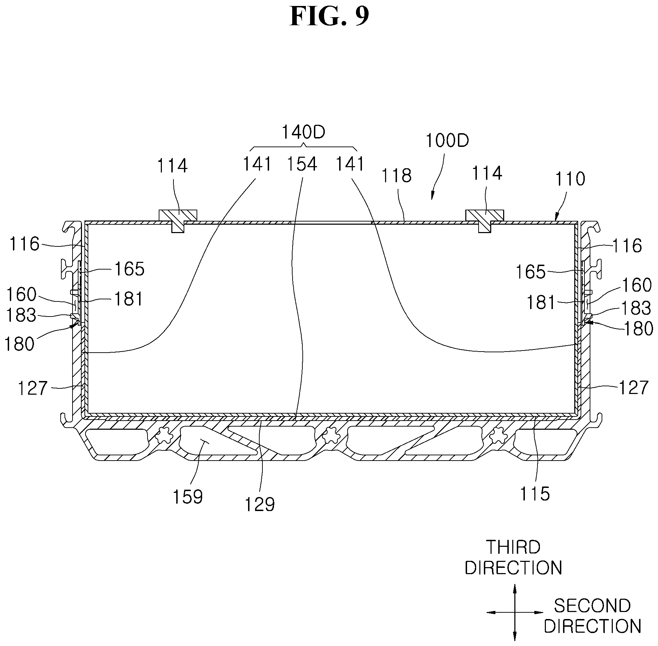

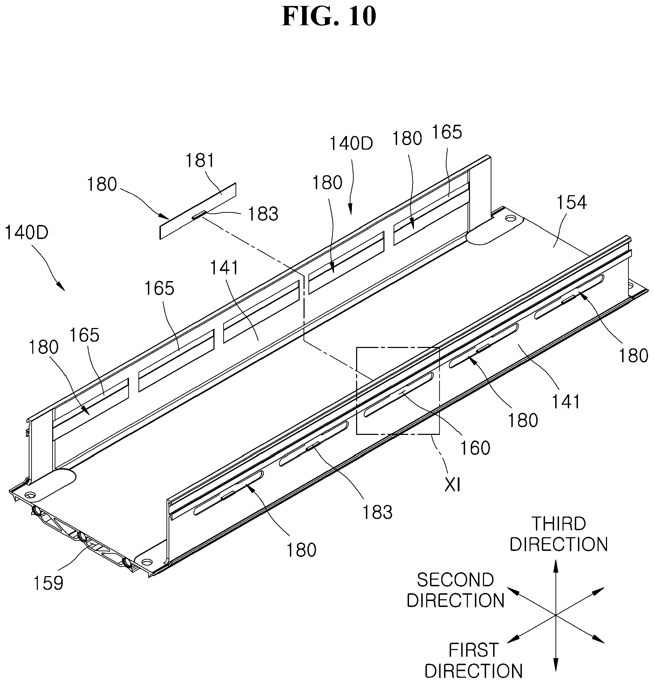

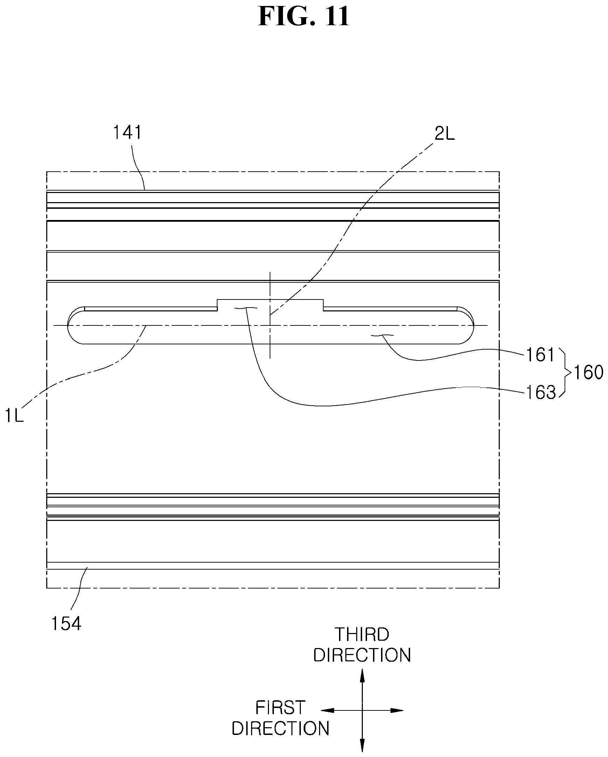

FIG. 9 is a longitudinal cross-sectional view of a battery module according to a fourth embodiment of the present invention, FIG. 10 is a perspective view of a battery cell carrier included in the battery module of FIG. 9 and illustrates an exploded state of one of a plurality of shutters, and FIG. 11 is an enlarged lateral view of portion XI of FIG. 10 which is a portion of the battery cell carrier.

Referring to FIGS. 9 to 11, like the battery module 100A according to the first embodiment of the present invention, a battery module 100D according to the fourth embodiment of the present invention may include a plurality of battery cells 110, a battery cell carrier 140D, a side gap filler layer 127, and a bottom gap filler layer 129.

Since the plurality of battery cells 110, the side gap filler layer 127, and the bottom gap filler layer 129 included in the battery module 100D according to the fourth embodiment of the present invention may be the same as the plurality of battery cells 110, the side gap filler layer 127, and the bottom gap filler layer 129 that are included in the battery module 100A according to the first embodiment of the present invention and denoted by the same reference numerals, repeated descriptions thereof will be omitted.

The battery cell carrier 140D includes a pair of side plates 141, a bottom plate 154, and a shutter 180. Since the bottom plate 154 is the same as the bottom plate 154 of the battery cell carrier 140A included in the battery module 100A according to the first embodiment of the present invention, repeated description thereof will be omitted.

The plurality of battery cells 110, that is, a battery cell stack 101, are interposed between the pair of side plates 141. A gap filler injection hole 160 that passes through each side plate 141 in the thickness direction thereof may be formed in the pair of side plates 141.

The gap filler injection hole 160 may be gradually inclined toward the bottom plate 154 closer to a side surface 116 of the battery cell 110 and formed to pass through the side plate 141 in the second direction. The gap filler injection hole 160 may be provided as a plurality of gap filler injection holes 160. The plurality of gap filler injection holes 160 may be disposed in a row in the first direction while being spaced from each other.

The shutter 180 selectively opens or closes the gap filler injection hole 160 formed in the side plate 141. In other words, a worker manufacturing the battery module 100D may use the shutter 180 to close or open the gap filler injection hole 160. The gap filler injection hole 160 may be provided as a plurality of gap filler injection holes 160, and the shutter 180 may be provided as a plurality of shutters 180 to correspond one-to-one to the gap filler injection holes 160. Alternatively, a plurality of shutters 180 may be connected among each other to facilitate installation and removal convenience.

The shutter 180 may include a movable plate 181 and a trigger 183. The movable plate 181 may be disposed between the side plate 141 and the plurality of battery cells 110. The movable plate 181 may move between a first position at which the movable plate 181 opens the gap filler injection hole 160 and a second position at which the movable plate 181 closes the gap filler injection hole in the first direction. A state in which the movable plate 181 is positioned at the first position is illustrated with two-dot chain lines in FIG. 10.

The trigger 183 protrudes from the movable plate 181 to the outer side of the side plate 141 through the gap filler injection hole 160. The trigger 183 may be pressed to move the movable plate 181.

The gap filler injection hole 160 may include a slot portion 161 and a trigger accommodating portion 163. The slot portion 161 extends in the first direction, specifically, along a virtual first line 1L parallel to the first direction. When the movable plate 181 is positioned at the first position, a gap filler injection device 10 (see FIG. 3) may be fitted into the slot portion 161 to inject a gap filler 125 (see FIG. 1).

The trigger accommodating portion 163 extends in the third direction, specifically, along a virtual second line 2L parallel to the third direction, in order to be connected to the slot portion 161. When the movable plate 181 is positioned at the first position, the trigger 183 may be accommodated in the trigger accommodating portion 163.

A movable plate guide groove 165 may be formed in inner surfaces of the pair of side plates 141, that is, surfaces that face the side surfaces 116 of the battery cells 110. The movable plate guide groove 165 may be provided as a plurality of movable plate guide grooves 165, and the number of movable plate guide grooves 165 may correspond to the number of gap filler injection holes 160.

The shutter 180 may move between the first position and the second position in a state in which the movable plate 181 is seated on the movable plate guide groove 165. Accordingly, the movable plate 181 may not protrude to be stepped from the inner surface of the side plate 141 to the side surface 116 of the battery cell 110.

Before a gap filler 125 (see FIG. 1) is injected through the gap filler injection hole 160, the shutter 180 may move to and be positioned at the first position for the gap filler injection hole 160 to be opened. Also, after the gap filler 125 is injected through the gap filler injection hole 160, the shutter 180 may move to the second position for the gap filler injection hole 160 to be closed. Therefore, it is possible to prevent foreign matter from entering the battery cell carrier 140D through the gap filler injection hole 160 after the gap filler 125 is injected.

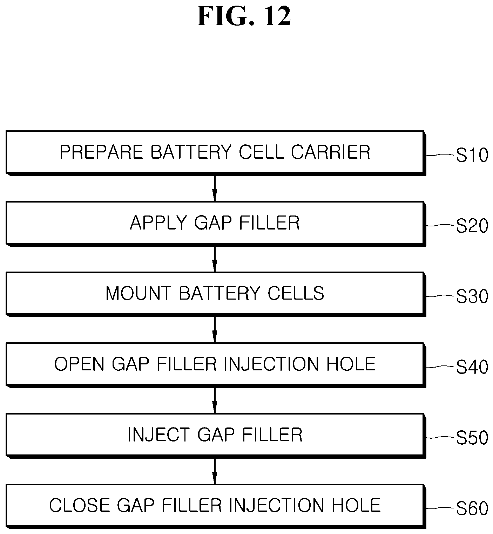

FIG. 12 is a flowchart illustrating a method of manufacturing a battery module according to one embodiment of the present invention. Referring to FIG. 12, the method of manufacturing a battery module according to one embodiment of the present invention may include a battery cell carrier preparing operation (S10), a battery cell mounting operation (S30), and a gap filler injecting operation (S50).

Referring to FIG. 12 along with FIGS. 1 to 4, the battery cell carrier preparing operation (S10) is an operation of preparing a battery cell carrier 140A. Alternatively, the battery cell carrier preparing operation may also be an operation of preparing any one of battery cell carriers 140B, 140C or 140D. The battery cell carrier 140A may include a pair of side plates 141 spaced in the second direction for a plurality of battery cells 110 arranged in the first direction to be interposed therebetween and having a gap filler injection hole 142 formed therein. Since the battery cell carrier 140A has already been described above in the description of the battery module 100A according to the first embodiment of the present invention, repeated description thereof will be omitted.

The battery cell mounting operation (S30) is an operation of mounting the plurality of battery cells 110 on the battery cell carrier 140Afor the plurality of battery cells 110 to be interposed between the pair of side plates 141.

The gap filler injecting operation (S50) is an operation of injecting a gap filler 125 between both side surfaces 116 of the plurality of battery cells 110 and the pair of side plates 141 through the gap filler injection hole 142 to form a side gap filler layer 127 configured to fix the plurality of battery cells 110 to the battery cell carrier 140A. Since the side gap filler layer 127 formed by the gap filler 125 being injected through the gap filler injection hole 142 has already been described above in the description of the battery module 100A according to the first embodiment of the present invention, repeated description thereof will be omitted.

As illustrated in FIGS. 1 and 2, the battery cell carrier 140A may further include a bottom plate 154. Since the bottom plate 154 has already been described above in the description of the battery module 100A according to the first embodiment of the present invention, repeated description thereof will be omitted.

The method of manufacturing a battery module may further include a gap filler applying operation (S20) between the battery cell carrier preparing operation (S10) and the battery cell mounting operation (S30). The gap filler applying operation (S20) is an operation of applying the gap filler 125 on the bottom plate 154, prior to the battery cell mounting operation (S30).

In the battery cell mounting operation (S30), the plurality of battery cells 110 may be mounted on the battery cell carrier 140A for the gap filler 125 applied on the bottom plate 154 to be interposed between the plurality of battery cells 110 and the bottom plate 154.

Referring to FIGS. 7 and 8, a battery cell carrier 140C may further include a shutter 170 configured to selectively open or close the gap filler injection hole 142. Since the shutter 170 has already been described above in the description of the battery module 100C according to the third embodiment of the present invention, repeated description thereof will be omitted.

The method of manufacturing a battery module may further include a gap filler injection hole opening operation (S40) between the battery cell mounting operation (S30) and the gap filler injecting operation (S50) and may further include a gap filler injection hole closing operation (S60) after the gap filler injecting operation (S50).

The gap filler injection hole opening operation (S40) is an operation of opening the gap filler injection hole 142, prior to the gap filler injecting operation (S50). The gap filler injection hole 142 may be opened by the shutter 170 being separated to be spaced from the gap filler injection hole 142. In other words, the shutter 170 may be removed from the gap filler injection hole 142.

The gap filler injection hole closing operation (S60) is an operation of closing the gap filler injection hole 142 with the shutter 170, after the gap filler injecting operation (S50). The gap filler injection hole 142 may be closed by the body 171 of the shutter 170 being fitted into the gap filler injection hole 142 and fixed.

The method of manufacturing a battery module may further include fixing and coupling an end plate 121 to the battery cell carrier 140A, coupling a busbar holder to the battery cell carrier 140A, and connecting a plurality of busbars to terminals 114 of the battery cells 110.

According to one embodiment of the present invention, a side gap filler layer in which a gap filler is dispersed with a uniform distribution can be formed between a plurality of battery cells and a sidewall of a battery cell carrier. Therefore, movement can be suppressed between the battery cell carrier and the plurality of battery cells in a battery module.

According to one embodiment of the present invention, it is not necessary to tilt the battery cell carrier for the sidewall of the battery cell carrier to be supported on a floor to apply a gap filler on the sidewall. Also, a gap filler can be concurrently, e.g. simultaneously applied on both sidewalls of the battery cell carrier that face each other. Therefore, productivity of the battery module can be improved.

However, the effects obtainable through the present disclosure are not limited to the above effects, and other technical effects that are not mentioned will be clearly understood by those skilled in the art from the following description of the present disclosure.

Although the present invention has been described with reference to embodiments and drawings illustrating aspects thereof, the present invention is not limited thereto. Various modifications and variations can be made by a person skilled in the art to which the present invention belongs within the scope of the present invention and the claims and equivalents thereto.

## Claims

1. A battery cell carrier (140A, 140B, 140C, 140D) comprising:
a pair of side plates (141) disposed to be spaced in a second direction orthogonal to a first direction for a plurality of battery cells (110) arranged in the first direction to be interposed therebetween and having a gap filler injection hole (142, 146, 160) through which a gap filler (125) is to be injected formed therein.

2. The battery cell carrier (140A, 140B, 140C, 140D) of claim 1, wherein the gap filler injection hole (142, 146, 160) extends in the first direction.

3. The battery cell carrier (140A, 140B, 140C, 140D) of claim 1 or 2, wherein
a battery cell (110) of the plurality of battery cells comprises a terminal side surface (118) comprising a terminal (114) provided thereon to protrude toward one side in a third direction orthogonal to the first direction and the second direction and a bottom surface (115) opposite to the terminal side surface (118) in the third direction; and
the gap filler injection hole (142, 146, 160) is inclined toward the bottom surface (115) closer to a side surface (116) of the battery cell (110) and formed to pass through the side plate (141) in the second direction.

4. The battery cell carrier (140A, 140B, 140C, 140D) of any one of the preceding claims 1 to 3, wherein
the gap filler injection hole (142, 146, 160) is provided as a plurality of gap filler injection holes (142, 146, 160); and
the plurality of gap filler injection holes (142, 146, 160) are disposed to be spaced in a third direction orthogonal to the first direction and the second direction in the side plate (141).

5. The battery cell carrier (140A, 140B, 140C, 140D) of any one of the preceding claims 1 to 4, wherein
the gap filler injection hole (142, 146, 160) is provided as a plurality of gap filler injection holes (142, 146, 160); and
the plurality of gap filler injection holes (142, 146, 160) are disposed to be spaced in the first direction in the side plate (141).

6. The battery cell carrier (140A, 140B, 140C, 140D) of any one of the preceding claims 1 to 5, wherein:
a battery cell (110) of the plurality of battery cells comprises a terminal side surface (118) comprising a terminal (114) provided thereon to protrude toward one side in a third direction orthogonal to the first direction and the second direction and a bottom surface (115) which is a side surface (116) opposite to the terminal side surface (118) in the third direction; and
the battery cell carrier (140A, 140B, 140C, 140D) further comprises a bottom plate (154) configured to cover the bottom surface (115) and comprising one side and another side connected to the pair of side plates (141) in the second direction.

7. The battery cell carrier (140A, 140B, 140C, 140D) of any one of the preceding claims 1 to 6, further comprising a shutter (170, 180) configured to selectively open or close the gap filler injection hole (142, 146, 160).

8. A battery module (100A, 100B, 100C, 100D) comprising:
a plurality of battery cells (110) arranged in a first direction;
a battery cell carrier (140A, 140B, 140C, 140D) including a pair of side plates (141) disposed to be spaced in a second direction orthogonal to the first direction for the plurality of battery cells (110) to be interposed therebetween, the pair of side plates (141) having a gap filler injection hole (142, 146, 160) formed therein; and
a side gap filler layer (127) which is formed by a gap filler (125) being injected between side surfaces (116) of the plurality of battery cells (110) and the pair of side plates (141) through the gap filler injection hole (142, 146, 160) and which is configured to fix the plurality of battery cells (110) to the battery cell carrier (140A, 140B, 140C, 140D).

9. The battery module (100A, 100B, 100C, 100D) of claim 8, wherein the battery cell carrier (140A, 140B, 140C, 140D) further comprises a shutter (170, 180) configured to selectively open or close the gap filler injection hole (142, 146, 160).

10. The battery module (100A, 100B, 100C, 100D) of claim 9, wherein the shutter (170, 180) comprises:
a body (171) configured to be detachably fitted into the gap filler injection hole (142, 146, 160); and
a flange (177) connected to the body (171) while stepped therefrom and having a shape larger than a shape of the gap filler injection hole (142, 146, 160) in a plan view to cover the gap filler injection hole (142, 146, 160) from an outer side of the side plate (141) when the body (171) is fitted into the gap filler injection hole (142, 146, 160).

11. The battery module (100A, 100B, 100C, 100D) of claim 9, wherein the shutter (170, 180) comprises:
a movable plate (181) disposed between the side plate (141) and the plurality of battery cells (110) and configured to be movable between a first position at which the movable plate (181) opens the gap filler injection hole (142, 146, 160) and a second position at which the movable plate (181) closes the gap filler injection hole (142, 146, 160); and
a trigger (183) configured to protrude from the movable plate (181) to the outer side of the side plate (141) through the gap filler injection hole (142, 146, 160) and be pressed to move the movable plate (181).

12. The battery module (100A, 100B, 100C, 100D) of claim 11, wherein the gap filler injection hole (142, 146, 160) comprises:
a slot portion (161) extending in the first direction and into which a device (10) for injecting the gap filler (125) is to be fit when the movable plate (181) is positioned at the first position; and
a trigger accommodating portion (163) extending in the third direction to be connected to the slot portion (161) and configured to accommodate the trigger (183) therein when the movable plate (181) is positioned at the first position.

13. A method of manufacturing a battery module (100A, 100B, 100C, 100D), the method comprising:
preparing a battery cell carrier (S10) including a pair of side plates (141) spaced in a second direction orthogonal to a first direction for a plurality of battery cells (110) arranged in the first direction to be interposed therebetween and having a gap filler injection hole (142, 146, 160) formed therein;
mounting the plurality of battery cells (S30) on the battery cell carrier (140A, 140B, 140C, 140D) for the plurality of battery cells (110) to be interposed between the pair of side plates (141); and
injecting a gap filler (S50) between side surfaces (116) of the plurality of battery cells (110) and the pair of side plates (141) through the gap filler injection hole (142, 146, 160) to form a side gap filler layer (127) configured to fix the plurality of battery cells (110) to the battery cell carrier (140A, 140B, 140C, 140D).

14. The method of claim 13, wherein:
the battery cell carrier (140A, 140B, 140C, 140D) further comprises a bottom plate (154) having one side and another side connected to the pair of side plates (141) in the second direction;
the method further comprises, prior to mounting the plurality of battery cells (110),, applying the gap filler (S20) on the bottom plate (154); and
in the mounting the plurality of battery cells (110), the plurality of battery cells (110) are mounted on the battery cell carrier (140A, 140B, 140C, 140D) such that the gap filler (125) applied on the bottom plate (154) is between the plurality of battery cells (110) and the bottom plate (154).

15. The method of claim 13, wherein the battery cell carrier (140A, 140B, 140C, 140D) further comprises a shutter (170, 180) configured to selectively open or close the gap filler injection hole (142, 146, 160), and
the method further comprises:
prior to injecting the gap filler (125), opening the gap filler injection hole (S40); and
after injecting the gap filler (125), closing the gap filler injection hole (S60) with the shutter (170, 180).
